# EUROPÄISCHE PATENTANMELDUNG

(11) **EP 4 130 518 A2**
(43) Veröffentlichungstag der Anmeldung: **08.02.2023**
(21) Anmeldenummer: 22186428.3
(22) Anmeldetag: 22.07.2022
(51) Int. Cl.: F16H 63/18, F16H 63/34

(54) **SCHALTGETRIEBESPERRE ZUR PARKUNTERSTÜTZUNG**

(30) Priorität: 05.08.2021 AT 506422021
(71) Anmelder: KTM AG, 5230 Mattighofen (AT)
(72) Erfinder: MARAND, Sascha, 5310 Mondsee (AT); KOINEGG, Thomas, 5672 Fusch (AT)
(74) Vertreter: Torggler & Hofmann Patentanwälte - Innsbruck

(57) **Zusammenfassung**

Schaltgetriebesperre (30), vorzugsweise zur Parkunterstützung, für ein Schaltgetriebe (1) umfassend mindestens eine Schaltwalze (2) und mindestens ein Sperrrad (15) mit einer Verzahnung (19), wobei die Schaltgetriebesperre (30) eine drehbar gelagerte Sperrklinke (13) aufweist, wobei die Sperrklinke (13) in einer Sperrstellung in die Verzahnung (19) des mindestens einen Sperrrads (15) eingreift und in einer Freilaufstellung mit dem mindestens einen Sperrrad (15) außer Eingriff steht, und wobei die Sperrklinke (13) von einem Federelement (16) in Richtung der Sperrstellung vorgespannt ist, wobei ein Eingriffselement (12) mit der Sperrklinke (13) verbunden ist, wobei das Eingriffselement (12) die Sperrklinke (13) durch direktes Zusammenwirken mit der Schaltwalze (2) gegen die Wirkung des Federelements (16) in der Freilaufstellung hält, wenn die Schaltwalze (2) eine Drehstellung in einem Freilaufdrehbereich einnimmt, und wobei die Sperrklinke (13) mittels des Eingriffselements (12) von der Schaltwalze (2) in eine Sperrstellung freigebbar ist, wenn die Schaltwalze (2) eine Drehstellung in einem Sperrdrehbereich einnimmt.

## Beschreibung

Die Erfindung betrifft eine Schaltgetriebesperre zur Parkunterstützung, für ein Schaltgetriebe umfassend mindestens eine Schaltwalze und mindestens ein Sperrrad mit einer Verzahnung, wobei die Schaltgetriebesperre eine drehbar gelagerte Sperrklinke aufweist, wobei die Sperrklinke in einer Sperrstellung in die Verzahnung des mindestens einen Sperrrads eingreift und in einer Freilaufstellung mit dem mindestens einen Sperrrad außer Eingriff steht, und wobei die Sperrklinke von einem Federelement in Richtung der Sperrstellung vorgespannt ist.

Weiters betrifft die Erfindung ein Schaltgetriebe, umfassend mindestens eine Schaltwalze, mindestens ein Sperrrad mit einer Verzahnung und eine Schaltgetriebesperre. Auch umfasst die Erfindung ein Motorrad mit einem Antriebsmotor und einem Schaltgetriebe.

Beim Abstellen von Motorrädern in geneigtem Gelände oder beim Transport müssen die Motorräder gegen ein Rollen gesichert werden. Bei Motorrädern mit einem manuellen Schaltgetriebe wird dazu üblicherweise ein Gang eingelegt, sodass die Räder an den Antriebsmotor gekoppelt sind.

Insbesondere bei automatischen Getrieben ist der Antriebsmotor oft durch eine "normally open"-Kupplung, insbesondere eine Fliehkraftkupplung an das Schaltgetriebe angekuppelt. Im Stand läuft die "normally open"-Kupplung leer, wodurch keine Verbindung zwischen Antriebsmotor und Getriebe besteht. Das Einlegen eines Ganges führt daher nicht zu der erwünschten Blockierung der Räder. Daher ist eine Feststellbremse insbesondere bei Motorrädern mit automatischem Schaltgetriebe notwendig.

Eine Feststellbremse bei Motorrädern kann mit einer eigenen Hinterrad- und/oder Vorderradbremse realisiert werden. Diese kann beispielsweise vom Lenker über einen eigenen Hebel oder über den Seitenständer betätigt werden. Nachteilig hierbei ist, dass ein eigenes Bremssystem für die Feststellbremse geschaffen werden muss und somit eine Vielzahl an weiteren Komponenten verbaut werden müssen. Zudem muss eine Betätigungsanzeige mit einem zusätzlichen Sensor überwacht werden. Bei einer Betätigung über einen eigenen Hebel am Lenker kann das Lösen der Feststellbremse vergessen werden.

Auch ist im Stand der Technik vorgesehen, dass die Vorderradbremse und/oder die Hinterradbremse beim Parken dauerhaft betätigt werden. Damit wird nur das bereits bestehende Betriebsbremssystem verwendet. Nachteilig hierbei ist, dass dies die Funktion des Betriebsbremssystems beeinträchtigen kann. Zudem muss eine Betätigungsanzeige mit einem zusätzlichen Sensor überwacht werden. Insbesondere das Lösen einer dauerhaften Betätigung der Hinterradbremse kann beim Losfahren vergessen werden.

Im Stand der Technik sind weiterhin Feststellbremsen, welche als Schaltgetriebesperre ausgeformt sind, für Kraftfahrzeuge wie Autos oder Quads vorgesehen.

Die Druckschrift EP 1 865 237 A1 zeigt eine Schaltgetriebesperre für ein Quad, wobei ein Sperrrad im Schaltgetriebe von einer Sperrklinke blockiert werden kann.

Die Sperrklinke ist drehbar gelagert und fest mit einem Stützarm verbunden. Der Stützarm ist gegen eine Schaltwalze des Schaltgetriebes in einer Freilaufstellung des Sperrrads vorgespannt. An der Schaltwalze ist eine Schließnocke angebracht, wobei der Hebel an der Sperrklinke durch ein Verdrehen der Schaltwalze in eine durch die Position der Schließnocke bestimmte Drehstellung die Sperrklinke gegen die Vorspannung in das Sperrrad drückbar ist und somit eine Sperrstellung realisiert wird.

Nachteilig an diesem Stand der Technik ist, dass die Sperrklinke von einer Schließnocke in die Sperrstellung gedrückt wird. Es muss daher vermieden werden, dass ein Klinkenzahn auf einen Zahn des Sperrrads trifft. Als Lösung ist in der EP 1 865 237 A1 weiterhin eine zusätzliche Feder vorgesehen, welche beim Auftreffen eines Klinkenzahns auf einen Zahn des Sperrrads einfedert und damit eine Beschädigung der Sperrklinke oder des Sperrrads vermeiden soll. Damit ist eine Vielzahl an Bauteilen notwendig.

Die Druckschrift DE 10 2013 107 860 A1 zeigt eine Getriebesperre für ein Automatikgetriebe, wobei ein Sperrrad im Schaltgetriebe von einer Sperrklinke blockiert werden kann. Die Sperrklinke wird dabei über einen Hebelmechanismus mit mehreren drehbar miteinander verbundenen Hebeln von einer Kurvenscheibe betätigt. Die Kurvenscheibe kann an einer Schaltwalze des Schaltgetriebes angeordnet sein, womit die Sperrklinke auch über eine Drehung der Schaltwalze betätigbar ist. Mittels des Hebelmechanismus kann das Sperrrad weit von der Kurvenscheibe entfernt angeordnet sein, womit die Schaltgetriebesperre für große Automatikgetriebe geeignet ist. Die Sperrklinke kann zumindest zeitweise in Richtung einer Schließstellung vorgespannt sein.

Nachteilig an diesem Stand der Technik ist, dass der Hebelmechanismus viel Platz einnimmt und daher insbesondere für Motorräder nicht geeignet ist. Auch ist dazu eine Vielzahl an Bauteilen notwendig.

Eine Aufgabe der vorliegenden Erfindung ist es, eine Schaltgetriebesperre, ein Schaltgetriebe mit einer Schaltgetriebesperre und ein Motorrad mit einer Schaltgetriebesperre zu schaffen, wobei die Schaltgetriebesperre kompakt ausgeformt ist und aus wenigen Bauteilen besteht.

Die Aufgabe wird gelöst durch die Gegenstände der Ansprüche 1, 9 und 15.

Bei einer erfindungsgemäße Schaltgetriebesperre ist vorgesehen, dass ein Eingriffselement mit der Sperrklinke verbunden ist, wobei das Eingriffselement die Sperrklinke durch direktes Zusammenwirken mit der Schaltwalze gegen die Wirkung des Federelements in der Freilaufstellung hält, wenn die Schaltwalze eine Drehstellung in einem Freilaufdrehbereich einnimmt, und wobei die Sperrklinke mittels des Eingriffselements von der Schaltwalze in eine Sperrstellung freigebbar ist, wenn die Schaltwalze eine Drehstellung in einem Sperrdrehbereich einnimmt.

Bei der Verbindung zwischen dem Eingriffselement und der Sperrklinke handelt es sich um eine drehfeste Verbindung. Insbesondere handelt es sich um eine starre, nicht verschiebbare Verbindung. Das Eingriffselement und die Sperrklinke können als ein Bauteil oder mehrteilig ausgeformt sein.

Dadurch, dass ein Eingriffselement mit der Sperrklinke verbunden ist, wobei das Eingriffselement die Sperrklinke durch direktes Zusammenwirken mit der Schaltwalze gegen die Wirkung des Federelements in der Freilaufstellung hält, ist kein Hebelmechanismus mit mehreren drehbar und/oder verschiebbar miteinander verbundenen Hebeln zur Betätigung der Sperrklinke notwendig. Damit werden eine kompakte Bauweise und eine Reduktion der Bauteile ermöglicht.

Dass das Eingriffselement direkt mit der Schaltwalze zusammenwirkt, um die Sperrklinke gegen die Wirkung des Federelements in der Freilaufstellung zu halten heißt, dass der Betätigungsmechanismus frei von einer Hebelwirkung zwischen Schaltwalze und Eingriffselement ist. Am Eingriffselement kann optional aber beispielsweise eine Rolle zum Abrollen an der Schaltwalze vorgesehen sein, da durch diese keine Hebelwirkung zwischen Schaltwalze und Eingriffselement verursacht wird. Insbesondere kann das Eingriffselement mehrteilig ausgeformt sein.

Es kann auch bedeuten, dass die Schaltwalze an einem mit der Sperrklinke fest, insbesondere nicht verschiebbar und/oder drehbar beweglich, verbundenen Bauteil, wie beispielsweise einem Mitnehmstift, angreift. Es kann auch bedeuten, dass die Schaltwalze mit einem mit der Schaltwalze fest, insbesondere nicht verschiebbar und/oder drehbar beweglich, verbundenen Bauteil, wie beispielsweise einer fest aufgesetzten Betätigungskulissenführung, an der Sperrklinke angreift.

Gleichzeitig ist die Sperrklinke erfindungsgemäß von einem Federelement in Richtung der Sperrstellung vorgespannt. Damit wird die Sperrklinke in der Freilaufstellung von dem Federelement an das Sperrrad gedrückt und muss nicht, beispielsweise von einer Schließnocke, in die Sperrstellung gedrückt werden. Es muss daher nicht vermieden werden, dass ein Klinkenzahn auf einen Zahn des Sperrrads trifft. Solange sich das Sperrrad weiterdreht, wird der Klinkenzahn bei Gelegenheit in einen Zwischenraum zwischen den Zähnen des Sperrrads nachrücken.

In einem bevorzugten Ausführungsbeispiel weist die Sperrklinke einen Lagerbereich, wobei die Sperrklinke im Lagerbereich drehbar gelagert ist, und einen Sperrbereich, wobei die Sperrklinke im Sperrbereich in die Verzahnung des Sperrrads eingreift, auf.

Nach einem weiteren Ausführungsbeispiel ist das Federelement als Torsionsfeder ausgebildet und/oder in einem Lagerbereich der Sperrklinke angeordnet. Damit wird auf platzsparende Weise die gewünschte Vorspannung der Sperrklinke erreicht.

Zusätzlich oder alternativ kann das Federelement in einem zweiten Endbereich der Sperrklinke an der Sperrklinke angreifen. In so einem Fall kann vorgesehen sein, dass das Federelement drehbar an der Schaltwalze gelagert ist. Damit wird die bereits im Schaltgetriebe vorhandene Schaltwalze zusätzlich als Lagerstift für das Federelement verwendet.

Das Federelement kann eine Druckfeder und/oder eine Teleskopführung umfassen.

Mit beiden Ausführungsformen des Federelements wird damit die Sperrklinke in die Richtung der Sperrstellung vorgespannt.

Die Sperrklinke kann in einem Sperrbereich eine Sperrkontur aufweisen, wobei die Sperrkontur in die Verzahnung vom mindestens einen Sperrrad eingreift. Dabei kann beispielsweise der Rand der Sperrklinke die Sperrkontur ausformen.

Die Sperrkontur kann in mindestens einen Zahnzwischenraum eingreifen, womit das mindestens eine Sperrrad blockiert wird. Es kann auch vorgesehen sein, dass die Sperrkontur in mindestens zwei Zahnzwischenräume eingreift. Damit muss das mindestens eine Sperrrad nicht nur von einem Klinkenzahn gehalten werden und die Last kann verteilt werden.

In einem Ausführungsbeispiel ist die Sperrkontur so an die Verzahnung des mindestens einen Sperrrads angepasst, dass die Sperrklinke vom mindestens einen Sperrrad mechanisch abgewiesen wird, sodass das Schaltgetriebe bei einem Eingriff der Sperrklinke in ein sich drehendes Sperrrad nicht blockiert. Die Sperrkontur kann auch so angepasst sein, dass die Sperrklinke aus der Sperrstellung auch dann lösbar ist, wenn das Schaltgetriebe unter Last steht. Dazu muss das Öffnungsmoment größer als die Reibkraft sein.

In einem weiteren Ausführungsbeispiel nimmt der Freilaufdrehbereich der Schaltwalze einen Winkel von 330 Grad bis 350 Grad ein und/oder der Sperrdrehbereich der Schaltwalze nimmt einen Winkel von 10 Grad bis 30 Grad ein. Im Freilaufdrehbereich ist daher genügend Platz für Schaltkonturen zum üblichen Schalten der Gänge des Schaltgetriebes.

Es kann vorgesehen sein, dass das Eingriffselement als Stützarm ausgeformt ist. Der Stützarm kann die Sperrklinke durch Abstützen an der Schaltwalze gegen die Wirkung des Federelements in der Freilaufstellung halten, wenn die Schaltwalze eine Drehstellung in einem Freilaufdrehbereich einnimmt.

Dabei weist der Stützarm vorzugsweise eine Anlagefläche zum Anlegen an die Schaltwalze auf. Mit der Anlagefläche kann sich der Stützarm an der Schaltwalze abstützen. An der Anlagefläche kann auch beispielsweise eine Rolle zum Abrollen an der Schaltwalze angebracht sein.

Weiterhin kann vorgesehen sein, dass der Stützarm in einem Lagerbereich der Sperrklinke mit der Sperrklinke verbunden ist. Insbesondere kann der Stützarm, vorzugsweise zusammen mit der Sperrklinke, an einer Schaltschiene des Schaltgetriebes gelagert sein.

Bevorzugt ist vorgesehen, dass der Stützarm zusammen mit der Sperrklinke einen zweiseitigen Hebel, insbesondere einen Winkelhebel, ausbildet, besonders bevorzugt wobei der Winkel des Winkelhebels im Bereich von 80 bis 100 Grad liegt. Durch die Verwendung als Winkelhebel kann eine besonders kompakte Bauweise der Schaltgetriebesperre erzielt werden, da dadurch das mindestens eine Sperrrad und die Schaltwalze bei gleicher Hebelwirkung näher aneinander angeordnet sein können.

Es kann weiterhin vorgesehen sein, dass eine Anlagefläche zum Anlegen des Stützarms an die Schaltwalze und eine Sperrkontur zum Eingriff der Sperrklinke in die Verzahnung des mindestens einen Sperrrads von einem gemeinsamen Lagerbereich des Stützarms und der Sperrklinke aus gesehen an der gleichen Seite des Stützarms beziehungsweise der Sperrklinke angeordnet sind. An dieser jeweiligen Seite des Stützarms beziehungsweise der Sperrklinke ist - zweckmäßig - die Schaltwalze beziehungsweise das mindestens eine Sperrrad angeordnet. Die Sperrklinke ist dabei vorzugsweise zwischen der Schaltwalze und dem mindestens einen Sperrrad angeordnet.

Die Schaltwalze kann eine Betätigungskontur aufweisen, wobei das Eingriffselement in der Freilaufstellung an der Betätigungskontur abstützbar ist. Dies ist insbesondere dann sinnvoll, wenn das Eingriffselement als Stützarm ausgeformt ist. Damit kann das Eingriffselement die Sperrklinke durch direktes Zusammenwirken mit der Schaltwalze gegen die Wirkung des Federelements in der Freilaufstellung halten. Die Form der Betätigungskontur definiert zumindest abschnittsweise die Drehstellung der Sperrklinke je nach Drehstellung der Schaltwalze.

Es ist bevorzugt vorgesehen, dass die Betätigungskontur im Freilaufdrehbereich der Schaltwalze entlang einer Kreisbahn verläuft, sodass das Eingriffselement mit einer Anlagefläche an der Betätigungskontur anliegt. Damit ändert sich die nicht in das Sperrrad eingreifende Position der Sperrklinke im gesamten Freilaufdrehbereich nicht. Alternativ kann eine elliptische oder eine andere nicht kreisförmige Form der Betätigungskontur vorgesehen sein.

Auch kann vorgesehen sein, dass im Sperrdrehbereich der Schaltwalze eine radial nach innen versenkte Ausnehmung und/oder eine radial nach innen versenkte Kurve aufweist, sodass das Eingriffselement bei einer Drehstellung der Schaltwalze im Sperrdrehbereich in radialer Richtung freigegeben ist und/oder radial weiter innen angeordnet ist als bei einer Drehstellung der Schaltwalze im Freilaufdrehbereich. Bildet das, insbesondere als Stützarm ausgeformte, Eingriffselement zusammen mit der Sperrklinke einen zweiseitigen Hebel, insbesondere einen Winkelhebel, aus, resultiert dies in einer Bewegung der Sperrklinke zum Sperrrad hin, sodass die Sperrklinke in das Sperrrad eingreift.

Alternativ ist vorgesehen, dass das Eingriffselement als Mitnehmerstift ausgeformt ist, wobei der Mitnehmerstift direkt mit der Schaltwalze zusammenwirkt.

Der Mitnehmerstift kann zwischen dem Lagerbereich und zumindest einem Teil des Sperrbereichs an der Sperrklinke befestigt sein. Dadurch sind keine weiteren Hebel und/oder Hebelmechanismen nötig und es kann eine sehr kompakte Bauweise der Schaltgetriebesperre mit wenigen Bauteilen realisiert werden.

Es kann vorgesehen sein, dass die Schaltwalze eine Betätigungskulissenführung aufweist und das Eingriffselement der Sperrklinke als Mitnehmerstift ausgebildet ist, wobei der Mitnehmerstift von der Betätigungskulissenführung haltbar oder freigebbar ist. Die Form der Betätigungskulissenführung definiert zumindest abschnittsweise die Drehstellung der Sperrklinke je nach Drehstellung der Schaltwalze.

Die Betätigungskulissenführung kann im Freilaufdrehbereich der Schaltwalze entlang einer Kreisbahn verlaufen, sodass der Mitnehmerstift im Freilaufdrehbereich vorzugsweise in einer Position in radialer Richtung der Schaltwalze haltbar ist. Damit ändert sich die nicht in das Sperrrad eingreifende Position der Sperrklinke im Freilaufdrehbereich nicht. Alternativ kann eine elliptische oder eine andere nicht kreisförmige Form der Betätigungskulissenführung vorgesehen sein.

Die Betätigungskulissenführung kann im Sperrdrehbereich der Schaltwalze eine radial nach außen weisende Ausbuchtung und/oder eine radial nach außen weisende Kurve aufweisen, sodass das Eingriffselement, insbesondere der Mitnehmerstift, bei einer Drehstellung der Schaltwalze im Sperrdrehbereich in radialer Richtung vorzugsweise freigegeben ist. Dann ist das Eingriffselement weiter außen angeordnet als bei einer Drehstellung der Schaltwalze im Freilaufdrehbereich. Ist der Mitnehmerstift zwischen dem Lagerbereich und zumindest einem Teil des Sperrbereichs an der Sperrklinke befestigt, resultiert dies in einer Bewegung zum Sperrrad hin, sodass die Sperrklinke und das Sperrrad eingreifen.

Es kann vorgesehen sein, dass der Mitnehmerstift bei einer Drehstellung der Schaltwalze im Sperrdrehbereich in radialer Richtung in einer zweiten radialen Position haltbar ist, wobei die zweite radiale Position weiter außen angeordnet ist als die radiale Position des Mitnehmerstift im Freilaufdrehbereich.

In einem bevorzugten Ausführungsbeispiel ist die Betätigungskontur und/oder die Betätigungskulissenführung radial innerhalb eines Außenradius der Schaltwalze angeordnet. Damit ist die Größe der Schaltwalze nicht größer als jene einer Schaltwalze in einem Schaltgetriebe ohne Getriebesperre, womit eine kompakte Bauform realisiert wird.

Es kann vorgesehen sein, dass die Betätigungskontur und/oder die Betätigungskulissenführung an einer Stirnseite der Schaltwalze angeordnet ist. Damit ist kein weiterer Bauteil, wie beispielsweise ein Kurvenrad, an der Schaltwalze notwendig, womit die Anzahl der Bauteile gering gehalten wird.

In einem besonders bevorzugten Ausführungsbeispiel ist die Sperrklinke und/oder zumindest ein Sperrbereich der Sperrklinke in einem Zwischenraum zwischen der Schaltwalze und dem mindestens einen Sperrrad angeordnet. Dadurch wird eine besonders kompakte Bauweise realisiert.

Ein erfindungsgemäßes Schaltgetriebe umfasst mindestens eine Schaltwalze, mindestens ein Sperrrad mit einer Verzahnung und eine in der Offenbarung der vorliegenden Schrift beschriebenen Schaltgetriebesperre.

Dabei ist vorzugsweise vorgesehen, dass das Schaltgetriebe ein Gehäuse aufweist und die Schaltgetriebesperre vollständig im Gehäuse angeordnet ist. Durch die kompakte Bauweise der Schaltgetriebesperre ist dies auch bei kleinen Schaltgetrieben möglich. Durch die Positionierung im Motorinneren ist das System witterungsgeschützt und wartungsfrei.

In einem Ausführungsbeispiel ist das mindestens eine Sperrrad drehfest mit einer Ausgangswelle des Schaltgetriebes verbunden. Dabei kann vorgesehen sein, dass das mindestens eine Sperrrad ausschließlich zum Sperren des Schaltgetriebes vorgesehen ist.

In einem besonders bevorzugten Ausführungsbeispiel weist das Schaltgetriebe eine Anzahl an Getrieberädern auf, wobei das mindestens eine Sperrrad als mindestens ein sperrbares Getrieberad der Anzahl der Getrieberäder ausgebildet ist. Damit ist kein zusätzliches Zahnrad zum Sperren des Schaltgetriebes notwendig, womit Gewicht und Bauteile gespart werden.

Ein Getrieberad überträgt in mindestens einer Schaltstellung des Schaltgetriebes Leistung von der Eingangswelle des Schaltgetriebes auf die Ausgangswelle des Schaltgetriebes.

Es kann dabei vorgesehen sein, dass das mindestens eine sperrbare Getrieberad als Festrad des Schaltgetriebes ausgebildet ist. Als Festrad wird hier ein Getrieberad bezeichnet, welches drehfest und verschiebfest an einer Welle befestigt ist.

Alternativ kann vorgesehen sein, dass das mindestens eine sperrbare Getrieberad als Schaltrad des Schaltgetriebes ausgebildet ist. Als Schaltrad wird ein Getrieberad bezeichnet, welche drehfest und verschiebbar an einer Welle befestigt ist.

Alternativ kann vorgesehen sein, dass das mindestens eine sperrbare Getrieberad als Losrad des Schaltgetriebes ausgebildet ist, wobei das mindestens eine sperrbare Getrieberad der Schaltwalze mit mindestens einem Schaltrad, besonders bevorzugt mittels Schaltklauen und/oder Schaltmuffen, drehfest verbunden ist, wenn die Schaltwalze eine Drehstellung im Sperrdrehbereich einnimmt. Damit führt das blockierte Losrad zur Blockierung der Räder.

Eine Welle kann beispielsweise als Eingangswelle, Ausgangswelle und/oder Nebenwelle ausgebildet sein. Das Schaltgetriebe kann eine Eingangswelle zum Antrieb und eine Ausgangswelle zum Abtrieb aufweisen. Zudem kann eine Nebenwelle vorgesehen sein. Eingangs- und Ausgangswelle können koaxial angeordnet sein. Es kann auch vorgesehen sein, dass die Ausgangswelle als Nebenwelle ausgebildet ist.

Das Schaltgetriebe kann mindestens eine Schaltschiene umfassen, wobei an der mindestens einen Schaltschiene mindestens eine Schaltgabel verschiebbar gelagert ist und wobei die Sperrklinke an mindestens einer Schaltschiene des Schaltgetriebes drehbar gelagert ist. Damit ist kein zusätzlicher Stift zur Lagerung der Sperrklinke notwendig, womit Bauteile eingespart werden und eine besonders kompakte Bauweise ermöglicht wird.

Bevorzugt ist vorgesehen, dass die Schaltwalze mindestens zwei Drehstellungen im Freilaufdrehbereich einnehmen kann, wobei je eine Drehstellung im Freilaufdrehbereich einem Gang des Schaltgetriebes entspricht. Damit kann mittels verschiedener Drehstellungen der Schaltwalze sowohl zwischen den Gängen geschaltet werden als auch das Schaltgetriebe gesperrt werden. Insbesondere kann im Freilaufdrehbereich zwischen mehreren Vorwärtsgängen geschaltet werden.

Bevorzugt ist das Schaltgetriebe als Klauengetriebe ausgebildet ist, wobei diese Schaltgetriebeart bei Motorrädern besonders oft Anwendung findet. Die Schaltwalze kann hierbei beispielsweise durch die Schaltklinke verdreht werden, welche mit dem Fußschalthebel betätigt wird.

Alternativ oder zusätzlich ist bevorzugt vorgesehen, dass das Schaltgetriebe als automatisches Schaltgetriebe ausgebildet ist, vorzugsweise wobei die Schaltwalze mittels eines Schaltmotors und/oder eines Zahnradantriebs drehbar ist. Damit können Gänge vollautomatisch oder aufgrund einer Betätigung des Fahrers automatisch geschaltet werden.

Ein erfindungsgemäßes Motorrad umfasst einen Antriebsmotor und ein Schaltgetriebe. Für Motorräder ist es besonders wichtig, eine kompakte Schaltgetriebesperre zu realisieren.

In einem Ausführungsbeispiel umfasst das Motorrad eine "normally open"-Kupplung, vorzugsweise eine Fliehkraftkupplung, wobei der Antriebsmotor mittels der "normally open"-Kupplung an das Schaltgetriebe kuppelbar ist. Damit wird der Antriebsmotor erst ab einer gewissen Drehzahl an das Schaltgetriebe angekoppelt. Dies ist insbesondere bei Motorrädern mit automatischem Schaltgetriebe typisch. Neben Fliehkraftkupplungen sind auch andere "normally-open"-Kupplungen denkbar, beispielweise hydraulische "normally open"-Kupplungen.

Es ist auch die Verwendung von "normally closed"-Kupplungen denkbar.

In einem bevorzugten Ausführungsbeispiel weist das Motorrad eine elektronische Steuereinheit auf, wobei von der elektronischen Steuereinheit Steuersignale an mindestens einen Aktor sendbar sind, wobei die Schaltwalze vom von den Steuersignalen steuerbaren, mindestens einen Aktor in mindestens eine Drehstellung im Freilaufdrehbereich und in mindestens eine Drehstellung im Sperrstelldrehbereich drehbar ist. Der Aktor kann beispielsweise als Teil eines, insbesondere elektrischen, Schaltmotors ausgeformt sein. Damit kann ein automatisches Schaltgetriebe realisiert werden. Es kann dabei vorgesehen sein, dass die Zugkraft beim Schalten automatisch zurückgenommen wird, sodass ein Kuppeln beim Schalten zwischen Gängen obsolet ist.

Es kann vorgesehen sein, dass Steuerbefehle eines Fahrers von der elektronischen Steuereinheit empfangbar sind, sodass der Fahrer zwischen verschiedenen Drehstellungen der Schaltwalze, insbesondere zwischen mindestens einer Drehstellung im Freilaufbereich und einer Drehstellung im Sperrbereich und/oder zwischen Drehstellungen im Freilaufbereich, schalten kann. Damit kann ein Fahrer das automatische Schaltgetriebe und die Getriebesperre betätigen. Zur Bedienung der Getriebesperre kann also, wenn ein automatisches Schaltgetriebe am Motorrad vorhanden ist, über bereits vorhandene Komponenten erfolgen, es werden keine zusätzlichen Bauteile benötigt.

In einem Ausführungsbeispiel ist vorgesehen, dass mindestens eine Betätigungsanzeige am Motorrad vorgesehen ist, wobei die mindestens eine Betätigungsanzeige die Drehstellung der Schaltwalze anzeigt. Damit wird ein Fahrer über den Schaltgetriebezustand, insbesondere ob das Schaltgetriebe gesperrt ist, informiert. Die Betätigungsanzeige kann beispielweise als Anzeige im Dashboard eines Motorrads ausgeformt sein. Dort kann eine Betätigung der Schaltgetriebesperre als Symbol oder Buchstabe dargestellt sein.

Dadurch, dass sowohl das Schalten der Gänge als auch die Getriebesperre über eine Drehstellung der Schaltwalze realisiert wird, ist nur ein Sensor für beide Funktionen notwendig. Insbesondere ist für die Getriebesperre kein eigener Sensor notwendig. Bereits vorhandene Sensoren zur Bestimmung der Drehstellung der Schaltwalze können verwendet werden.

Zusammengefasst weist die vorliegende Erfindung auch die folgenden Vorteile auf:
Durch die Integration der Feststellbremse in den Schaltmechanismus des Schaltgetriebes kann sichergestellt werden, dass ein Auslegen der Feststellbremse beim Anfahren nicht vergessen werden kann

Durch die geringe Anzahl an Bauteilen kann das System verhältnismäßig kostengünstig realisiert werden.

Weitere Ausführungsformen und Details sind aus den Figuren ersichtlich. Dabei zeigen:
- Fig. 1: Schaltgetriebe mit einer Schaltgetriebesperre in perspektivischer Ansicht
- Fig. 2a, 2b: Schaltgetriebesperre mit einer Schaltwalze und Sperrrad in perspektivischen Ansichten
- Fig. 2c: Schaltgetriebesperre mit einer Schaltwalze und Sperrrad in Seitenansicht
- Fig. 2d, 2e: Schaltgetriebesperre mit einer Schaltwalze und Sperrrad in Vorder- und Hinteransicht
- Fig. 3a, 3b: Schaltgetriebesperre mit Schaltwalze, Sperrrad und Zahnradantrieb in perspektivischen Ansichten
- Fig. 3c, 3d: Schaltgetriebesperre mit Schaltwalze, Sperrrad und Zahnradantrieb in Vorder- und Hinteransicht
- Fig. 4: Alternatives Ausführungsbeispiel eines Schaltgetriebes mit einer Schaltgetriebesperre in perspektivischer Ansicht

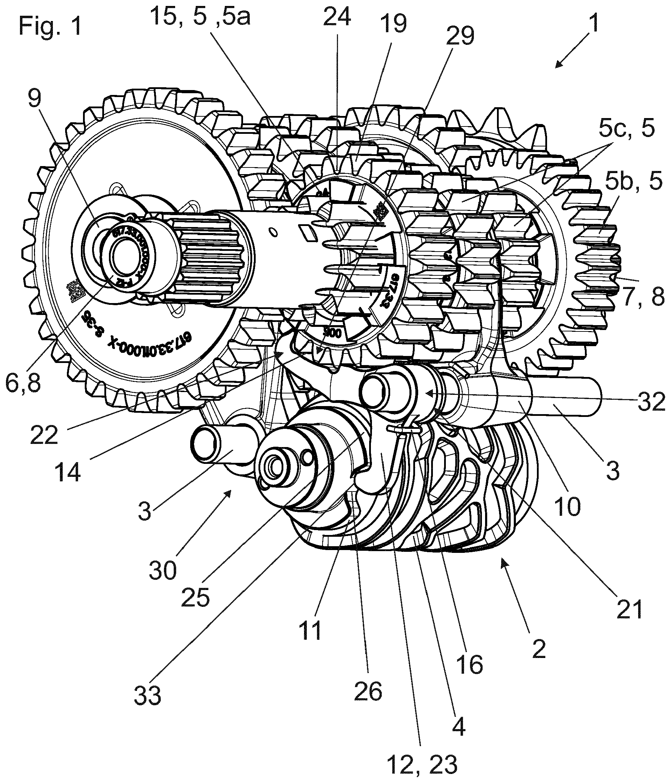

Die Fig. 1 zeigt ein Schaltgetriebe 1 mit einer Schaltgetriebesperre 30 in perspektivischer Ansicht. Die Schaltgetriebesperre 30 ist vorzugsweise zur Parkunterstützung geeignet. Durch eine Sperre des Schaltgetriebes 1 werden auch die Räder des Fahrzeugs, in welchem das Schaltgetriebe 1 verbaut ist, blockiert.

Das Schaltgetriebe 1 umfasst eine Schaltwalze 2, zwei Schaltschienen 3 und mehrere Getrieberäder 5.

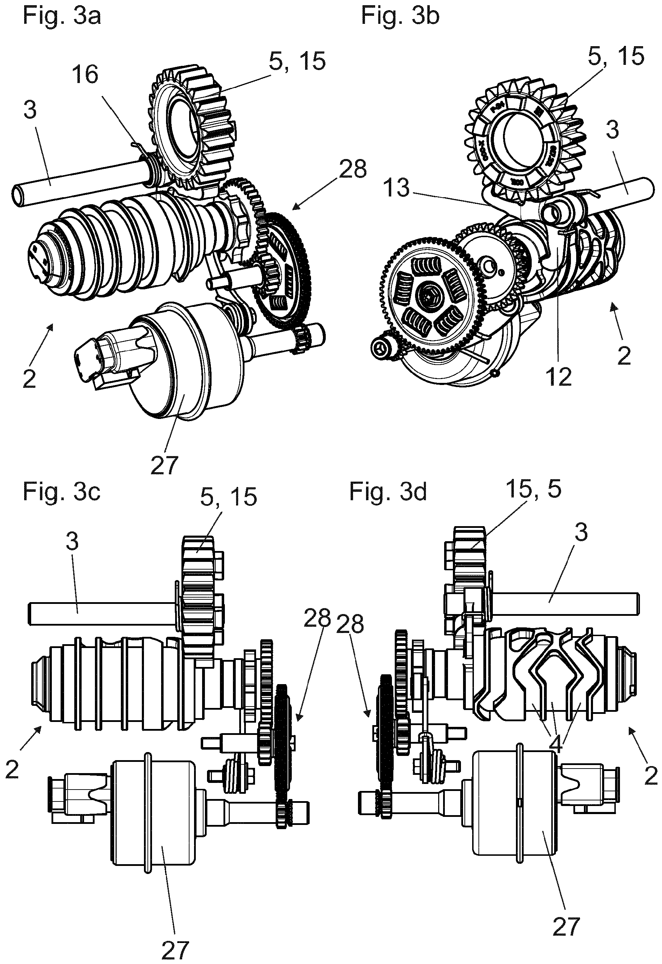

Insbesondere handelt es sich beim Schaltgetriebe 1 um ein Klauengetriebe, welches vorzugsweise als automatisches Schaltgetriebe ausgebildet ist. Dabei kann die Schaltwalze 2 mittels eines Schaltmotors 27 und/oder eines Zahnradantriebs 35 drehbar sein, wie aus den Figuren 3a bis 3d ersichtlich ist. Das Schaltgetriebe 1 kann aber auch als manuell schaltbares Schaltgetriebe ausgebildet sein.

An den zwei Schaltschienen 3 ist mindestens eine Schaltgabel 10 verschiebbar gelagert, mittels welcher bestimmte Getrieberäder 5 verschiebbar sind. Diese sogenannten Schalträder 5c sind drehfest mit der Eingangswelle 6 oder der Ausgangswelle 7 verbunden, wobei Eingangswelle 6 und Ausgangswelle 7 koaxial zueinander angeordnet sind und zusammen eine Hauptwelle 8 bilden. An einer Nebenwelle 9 können sind ebenfalls Getrieberäder 5 der erwähnten Art angeordnet sein.

Weiterhin sind an den Wellen Festräder 5b, welche drehfest und nicht verschiebbar an einer Welle angeordnet sind, und Losräder 5a, welche drehbar und nicht verschiebbar an einer Welle angeordnet sind, vorgesehen. Durch Verschieben kann ein Schaltrad 5c mittels Schaltklauen an ein Losrad 5a drehfest angekoppelt werden, sodass das Losrad 5a ebenfalls drehfest mit der Welle verbunden ist. So können verschiedene Kombinationen von Getrieberädern 5 an Eingangswelle 6, Nebenwelle 9 und Ausgangswelle 7 für den Kraftübertrag gewählt werden, womit verschiedene Gänge mit unterschiedlichen Übersetzungen für ein Motorrad realisiert werden.

Solche Schaltgetriebe 1 werden oft in Motorrädern verbaut. Vorzugsweise kann das Motorrad eine "normally open"-Kupplung, vorzugsweise eine Fliehkraftkupplung, aufweisen, wobei der Antriebsmotor des Motorrads mittels der "normally open"-Kupplung an das Schaltgetriebe 1 kuppelbar ist. Im Stand ist die Kupplung daher offen, womit die Räder des Motorrads nicht an den Antriebsmotor gekoppelt und damit nicht blockiert sind.

Die Schaltgetriebesperre 30 greift in die mindestens eine Schaltwalze 2 und mindestens ein Sperrrad 15 mit einer Verzahnung 19 ein. Dabei weist die Schaltgetriebesperre 30 eine drehbar gelagerte Sperrklinke 13 auf, wobei die Sperrklinke 13 in einer Sperrstellung in die Verzahnung 19 des mindestens einen Sperrrads 15 eingreift und in einer Freilaufstellung mit dem mindestens einen Sperrrad 15 außer Eingriff steht. Insbesondere ist die Sperrklinke 13 an mindestens einer Schaltschiene 3 des Schaltgetriebes 1 drehbar gelagert.

Die Sperrklinke 13 ist von einem Federelement 16 in Richtung der Sperrstellung vorgespannt. In dem Ausführungsbeispiel in Fig. 1 ist das Federelement 16 als Torsionsfeder ausgebildet ist und in einem Lagerbereich 32 der Sperrklinke 13 angeordnet.

In der Fig. 1 ist eines der Getrieberäder 5 ist als sperrbares Getrieberad ausgebildet, welches im Folgenden als Sperrrad 15 bezeichnet wird. Ist das Sperrrad 15 als Losrad 5a ausgebildet, muss das Losrad 5a in der Sperrstellung an ein Schaltrad 5c angekoppelt sein, da sonst das Schaltgetriebe 1 nicht von der Sperrklinke 13 sperrbar wäre.

Weiterhin ist aus der Fig. 1 ersichtlich, dass ein Eingriffselement 12 mit der Sperrklinke 13 verbunden ist, wobei das Eingriffselement 12 die Sperrklinke 13 durch direktes Zusammenwirken mit der Schaltwalze 2 gegen die Wirkung des Federelements 16 in der Freilaufstellung hält, wenn die Schaltwalze 2 eine Drehstellung in einem Freilaufdrehbereich einnimmt, und wobei die Sperrklinke 13 mittels des Eingriffselements 12 von der Schaltwalze 2 in eine Sperrstellung freigebbar ist, wenn die Schaltwalze 2 eine Drehstellung in einem Sperrdrehbereich einnimmt. Das Eingriffselement 12 ist mit der Sperrklinke 13 insbesondere drehfest verbunden. In der Fig. 1 ist dabei die Sperrstellung gezeigt, in welcher die Sperrklinke 2 mittels des Eingriffselements 12 freigegeben ist.

Zudem weist die Schaltwalze 2 mindestens zwei Drehstellungen im Freilaufdrehbereich auf, wobei je eine Drehstellung im Freilaufdrehbereich einem Gang des Schaltgetriebes 1 entspricht. Insbesondere sind im Freilaufdrehbereich mehrere Vorwärtsgänge vorgesehen.

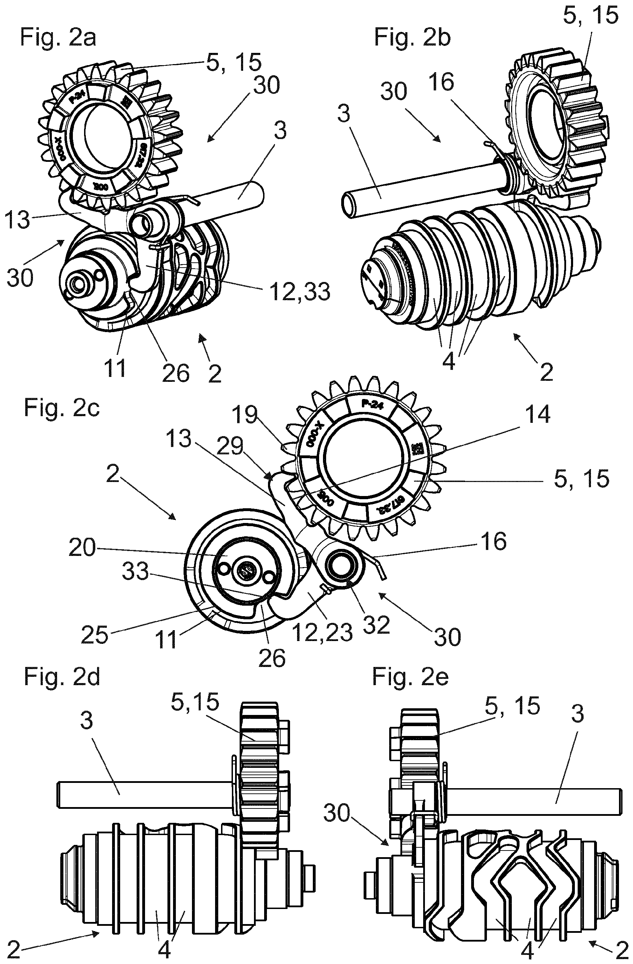

Die Figuren 2a bis 2e zeigen die Schaltgetriebesperre 30 aus der Fig. 1 in verschiedenen Ansichten, wobei hier das Schaltgetriebe 1 nicht vollständig dargestellt ist. Die Schaltgetriebesperre 30 ist hier ebenfalls in Sperrstellung dargestellt. Insbesondere anhand der Seitenansicht in Fig. 2c kann der Sperrmechanismus gut nachvollzogen werden.

Die Sperrklinke 13 weist einen Lagerbereich 32 auf, wobei die Sperrklinke 13 im Lagerbereich 32 drehbar gelagert ist. Zudem weist die Sperrklinke 13 einen Sperrbereich 34 auf, wobei die Sperrklinke 13 im Sperrbereich 34 in die Verzahnung 19 des Sperrrads 15 eingreift.

Im Sperrbereich 34 weist die Sperrklinke 13 insbesondere eine Sperrkontur 14 auf. Die Sperrkontur 14 greift in mindestens zwei verschiedene Zahnzwischenräume 24 ein, wobei die Sperrkontur 14 an die Verzahnung 19 angepasst ist. Dadurch wird realisiert, dass die Sperrklinke 13 vom mindestens einen Sperrrad 15 mechanisch abgewiesen wird, sodass das Schaltgetriebe 1 bei einem Eingriff der Sperrklinke 13 in ein sich drehendes Sperrrad 15 nicht blockiert und/oder aus der Sperrstellung auch dann lösbar ist, wenn das Schaltgetriebe 1 unter Last steht.

In den Figuren 1 bis 3d ist das Eingriffselement 12 als Stützarm 23 ausgeformt. Der Stützarm 23 weist eine Anlagefläche 33 zum Anlegen an die Schaltwalze 2 auf. Weiterhin ist der Stützarm in einem Lagerbereich 32 der Sperrklinke 13 mit der Sperrklinke drehfest verbunden. Zusammen mit der Sperrklinke 13 bildet der Stützarm 23 einen zweiseitigen Hebel, insbesondere einen Winkelhebel, aus, wobei der Winkel des Winkelhebels im Bereich von 80 bis 100 Grad liegt (siehe Fig. 2c).

Die Anlagefläche 33 zum Anlegen des Stützarms 23 an die Schaltwalze 2 und die Sperrkontur 14 zum Eingriff der Sperrklinke 13 in die Verzahnung 19 des mindestens einen Sperrrads 15 sind von einem gemeinsamen Lagerbereich 32 des Stützarms 23 und der Sperrklinke 13 aus gesehen an der gleichen Seite, insbesondere beide rechts, des Stützarms 23 beziehungsweise der Sperrklinke 13 angeordnet.

Diese Konfiguration von Anlagefläche 33 und Sperrkontur 14 ist zweckmäßig, da die Sperrklinke 13 und/oder zumindest ein Sperrbereich 34 der Sperrklinke 13 in einem Zwischenraum zwischen der Schaltwalze 2 und dem mindestens einen Sperrrad 15 angeordnet ist (siehe insbesondere Fig. 2c) .

Die Schaltwalze 2 weist eine Betätigungskontur 11 auf, wobei das Eingriffselement 12, hier insbesondere der Stützarm 23, in der Freilaufstellung an der Betätigungskontur 11 abstützbar ist. Insbesondere verläuft die Betätigungskontur 11 im Freilaufdrehbereich der Schaltwalze 2 entlang einer Kreisbahn 25, wobei das Eingriffselement 12, hier insbesondere der Stützarm 23, mit der Anlagefläche 33 an der Betätigungskontur 11 anliegt. Es sei hier angemerkt, dass die Freilaufstellung in keiner der Figuren dargestellt ist.

Im Sperrdrehbereich der Schaltwalze 2 weist die Betätigungskontur 11 eine radial nach innen versenkte Ausnehmung 26 und/oder eine radial nach innen versenkte Kurve auf, sodass das Eingriffselement 12, insbesondere der Stützarm 23, bei einer Drehstellung der Schaltwalze 2 im Sperrdrehbereich in radialer Richtung freigegeben ist.

Dadurch kann sich der Stützarm 23 nicht mehr an der Schaltwalze 2 abstützen, wodurch die Sperrklinke 13 durch das Federelement 16 in das Sperrrad 15 gedrückt wird.

In der Fig. 2c kann der Eindruck entstehen, dass der Stützarm 23 auch in der Sperrstellung an der Schaltwalze 2, insbesondere der Betätigungskontur 11, anliegt. Das ist bevorzugt nicht der Fall, da die Sperrklinke 13 in der Sperrstellung vom Sperrrad 15 gehalten wird.

Dadurch, dass der Stützarm 23 und die Sperrklinke 13 im Sperrdrehbereich mittels einer Ausnehmung 26 in der Betätigungskontur 11 freigegeben werden, wird die Sperrklinke 13 nicht von einer Betätigungskontur, beispielsweise mit einer Schließnocke, in die Verzahnung 19 des Sperrrads 15 gedrückt. Dagegen drückt das Federelement 16 die Sperrklinke 13 in die Verzahnung 19, womit kein Problem entsteht, wenn die Sperrklinke 13 mit ihrer Sperrkontur 14 nicht sofort in einen Zahnzwischenraum 24 trifft.

Zudem ist die Betätigungskontur 11 radial innerhalb eines Außenradius der Schaltwalze 2 an einer Stirnseite 20 der Schaltwalze 2 angeordnet. Es ist vorgesehen, dass die Betätigungskontur 11 direkt an der Schaltwalze 2 angeordnet ist und nicht etwa als ein gesonderter Bauteil an der Schaltwalze 2 befestigt ist.

Die Figuren 3a bis 3d zeigen eine Schaltgetriebesperre 30 mit Schaltwalze 2 und Sperrrad 15, wobei hier ein Zahnradantrieb 35 dargestellt ist, über welchen die Schaltwalze 2 mittels eines Schaltmotors 27 antreibbar ist.

Dies ist insbesondere bei automatischen Schaltgetrieben 1 eine mögliche Ausführungsform. Der Schaltmotor 27 ist typischerweise als Elektromotor ausgebildet.

Nicht dargestellt ist die Integration des automatischen Schaltgetriebes 1 in ein Motorrad. Es kann dabei beispielweise vorgesehen sein, dass Steuerbefehle eines Fahrers von einer elektronischen Steuereinheit empfangbar sind, sodass der Fahrer zwischen verschiedenen Drehstellungen der Schaltwalze, insbesondere zwischen mindestens einer Drehstellung im Freilaufbereich und einer Drehstellung im Sperrbereich und/oder zwischen Drehstellungen im Freilaufbereich, schalten kann. Von der Steuereinheit kann dann mindestens ein Aktor eines Schaltmotors 27 angesteuert werden.

Auch kann mindestens eine Betätigungsanzeige am Motorrad vorgesehen sein, wobei die mindestens eine Betätigungsanzeige die Drehstellung 2 der Schaltwalze anzeigt. Da die Drehstellung der Schaltwalze 2 beispielsweise über die Stellung eines Aktors des Schaltmotors 27 bekannt ist, muss für die Betätigungsanzeige kein zusätzlicher Sensor in der Schaltgetriebesperre 30 installiert werden.

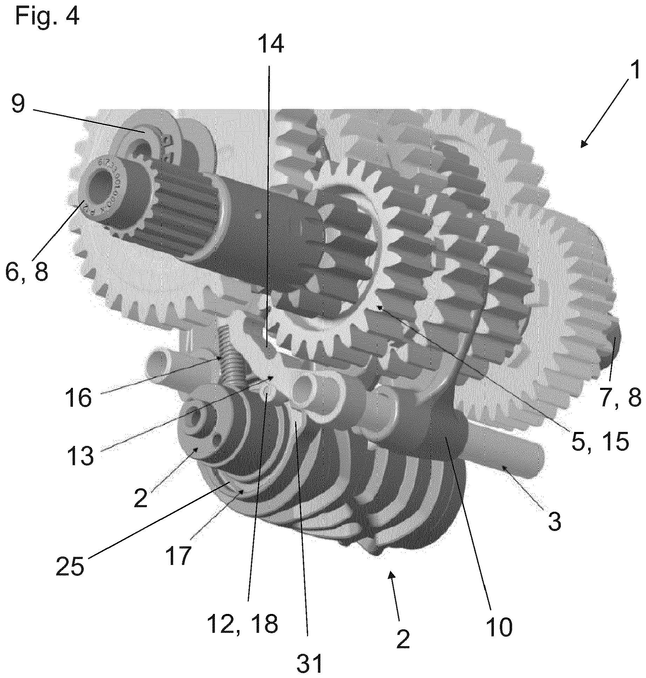

Die Fig. 4 zeigt ein alternatives Ausführungsbeispiel eines Schaltgetriebes 1 mit einer Schaltgetriebesperre 30 in perspektivischer Ansicht, wobei eine Freilaufstellung der Schaltgetriebesperre 30 dargestellt ist.

Das Federelement 16 greift hier im Gegensatz zum Ausführungsbeispiel aus den Figuren 1 bis 3d in einem zweiten Endbereich 22 der Sperrklinke 13 an der Sperrklinke 13 an, wobei der zweite Endbereich 22 dem Lagerbereich 32 der Sperrklinke 13 gegenüberliegt.

In so einem Fall kann, wie aus der Fig. 4 ersichtlich, vorgesehen sein, dass das Federelement 16 drehbar an der Schaltwalze 13 gelagert ist. Damit wird die bereits im Schaltgetriebe 1 vorhandene Schaltwalze 2 zusätzlich als Lagerstift für das Federelement 16 verwendet. Das Federelement 16 kann eine Druckfeder und/oder eine Teleskopführung umfassen.

Ein weiterer Unterschied zum Ausführungsbeispiel aus den Figuren 1 bis 3d ist die Form und Funktion des Eingriffselements 12, welches in der Fig. 4 als Mitnehmerstift 18 ausgebildet. Der Mitnehmerstift 18 wirkt zum Halten der Sperrklinke 13 in einer Freilaufstellung direkt mit der Schaltwalze 2 zusammen.

Der Mitnehmerstift 18 kann zwischen dem Lagerbereich 32 und zumindest einem Teil des Sperrbereichs 34 an der Sperrklinke 13 befestigt sein, wobei der Lagerbereich 32 an einem ersten Endbereich 21 der Sperrklinke 13 angeordnet ist und wobei der Sperrbereich 34 zumindest zum Teil an einem zweiten Endbereich 22 angeordnet ist. Die Kraft greift in diesem Ausführungsbeispiel daher direkt an der Sperrklinke 13 an. Die Sperrklinke 13 und das Eingriffselement 12 zusammen bilden hier keinen zweiseitigen Hebel aus.

Der Mitnehmerstift 18 und damit die Sperrklinke 13 sind von einer Betätigungskulissenführung 17 haltbar oder freigebbar, wobei die Betätigungskulissenführung 17 an der Schaltwalze 2 angeordnet ist. Die Form der Betätigungskulissenführung 17 definiert zumindest abschnittsweise die Drehstellung der Sperrklinke 13 je nach Drehstellung der Schaltwalze 2.

Die Betätigungskulissenführung 17 kann im Freilaufdrehbereich der Schaltwalze 2 entlang einer Kreisbahn 25 verlaufen, sodass der Mitnehmerstift 18 im Freilaufdrehbereich vorzugsweise in einer Position in radialer Richtung der Schaltwalze 2 haltbar ist. Damit ändert sich die nicht in das Sperrrad 15 eingreifende Position der Sperrklinke 13 im Freilaufdrehbereich nicht. Alternativ kann eine elliptische oder eine andere nicht kreisförmige Form der Betätigungskulissenführung 17 vorgesehen sein.

Die Betätigungskulissenführung 17 kann im Sperrdrehbereich der Schaltwalze 2 eine radial nach außen weisende Ausbuchtung 31 und/oder eine radial nach außen weisende Kurve aufweisen, sodass der Mitnehmerstift 18 bei einer Drehstellung der Schaltwalze 2 im Sperrdrehbereich in radialer Richtung vorzugsweise freigegeben ist. Dann ist der Mitnehmerstift 18 weiter außen angeordnet als bei einer Drehstellung der Schaltwalze 2 im Freilaufdrehbereich. Ist der Mitnehmerstift 18 zwischen dem Lagerbereich 32 und zumindest einem Teil des Sperrbereichs an der Sperrklinke 13 befestigt, resultiert dies in einer Bewegung zum Sperrrad 15 hin, sodass die Sperrklinke 13 und das Sperrrad 15 eingreift.

Bei der Bewegung der Sperrklinke 13 von der Freilaufstellung in die Sperrstellung bewegt sich im Ausführungsbeispiel der Fig. 4 eine Anlagefläche 33 des Eingriffselements 12 radial nach außen, während sich im Ausführungsbeispiel der Figuren 1 bis 3d die Anlagefläche 33 aufgrund der Hebelübersetzung nach innen bewegt.

Es kann vorgesehen sein, dass der Mitnehmerstift 18 bei einer Drehstellung der Schaltwalze 2 im Sperrdrehbereich in radialer Richtung in einer zweiten radialen Position haltbar ist, wobei die zweite radiale Position weiter außen angeordnet ist als die radiale Position des Mitnehmerstift 18 im Freilaufdrehbereich. Vorzugsweise ist jedoch auch hier vorgesehen, dass die Sperrklinke 13 in Sperrstellung vom Sperrrad 15 gehalten wird.

### Bezugszeichenliste:

- 1: Schaltgetriebe
- 2: Schaltwalze
- 3: Schaltschiene
- 4: Schaltkulissenführung
- 5: Getrieberad
- 5a: Losrad
- 5b: Festrad
- 5c: Schaltrad
- 6: Eingangswelle
- 7: Ausgangswelle
- 8: Hauptwelle
- 9: Nebenwelle
- 10: Schaltgabel
- 11: Betätigungskontur
- 12: Eingriffselement
- 13: Sperrklinke
- 14: Sperrkontur
- 15: Sperrrad
- 16: Federelement
- 17: Betätigungskulissenführung
- 18: Mitnehmerstift
- 19: Verzahnung des Sperrrads
- 20: Stirnseite der Schaltwalze
- 21: erster Endbereich der Sperrklinke
- 22: zweiter Endbereich der Sperrklinke
- 23: Stützarm
- 24: Zahnzwischenraum
- 25: Kreisbahn der Betätigungskontur/-kulissenführung
- 26: Ausnehmung der Betätigungskontur
- 27: Schaltmotor
- 28: Zahnradantrieb
- 29: Sperrbereich
- 30: Schaltgetriebesperre
- 31: Ausbuchtung der Betätigungskulissenführung
- 32: Lagerbereich
- 33: Anlagefläche

## Patentansprüche

1. Schaltgetriebesperre (30), vorzugsweise zur Parkunterstützung, für ein Schaltgetriebe (1) umfassend mindestens eine Schaltwalze (2) und mindestens ein Sperrrad (15) mit einer Verzahnung (19), wobei die Schaltgetriebesperre (30) eine drehbar gelagerte Sperrklinke (13) aufweist, wobei die Sperrklinke (13) in einer Sperrstellung in die Verzahnung (19) des mindestens einen Sperrrads (15) eingreift und in einer Freilaufstellung mit dem mindestens einen Sperrrad (15) außer Eingriff steht, und wobei die Sperrklinke (13) von einem Federelement (16) in Richtung der Sperrstellung vorgespannt ist, **dadurch gekennzeichnet, dass** ein Eingriffselement (12) mit der Sperrklinke (13) verbunden ist, wobei das Eingriffselement (12) die Sperrklinke (13) durch direktes Zusammenwirken mit der Schaltwalze (2) gegen die Wirkung des Federelements (16) in der Freilaufstellung hält, wenn die Schaltwalze (2) eine Drehstellung in einem Freilaufdrehbereich einnimmt, und wobei die Sperrklinke (13) mittels des Eingriffselements (12) von der Schaltwalze (2) in eine Sperrstellung freigebbar ist, wenn die Schaltwalze (2) eine Drehstellung in einem Sperrdrehbereich einnimmt.

2. Schaltgetriebesperre (30) nach dem vorhergehenden Anspruch, wobei die Sperrklinke (13) einen Lagerbereich (32) aufweist, wobei die Sperrklinke (13) im Lagerbereich (32) drehbar gelagert ist, und wobei die Sperrklinke (13) einen Sperrbereich (34) aufweist, wobei die Sperrklinke (13) im Sperrbereich (34) in die Verzahnung (19) des Sperrrads (15) eingreift.

3. Schaltgetriebesperre (30) nach einem der vorhergehenden Ansprüche, wobei das Federelement (16) als Torsionsfeder ausgebildet ist und/oder in einem Lagerbereich (32) der Sperrklinke (13) angeordnet ist.

4. Schaltgetriebesperre (30) nach einem der vorhergehenden Ansprüche, wobei die Sperrklinke (13) in einem Sperrbereich (34) eine Sperrkontur (14) aufweist, wobei die Sperrkontur (14) in die Verzahnung (19) vom mindestens einen Sperrrad (15) eingreift, wobei die Sperrkontur (14) vorzugsweise
- in mindestens einen, vorzugsweise mindestens zwei verschiedene, Zahnzwischenraum/-räume (24) eingreift, und/oder
- so an die Verzahnung (19) des mindestens einen Sperrrads (15) angepasst ist, dass die Sperrklinke (13)
- vom mindestens einen Sperrrad (15) mechanisch abgewiesen wird, sodass das Schaltgetriebe (1) bei einem Eingriff der Sperrklinke (13) in ein sich drehendes Sperrrad (15) nicht blockiert, und/oder
- aus der Sperrstellung auch dann lösbar ist, wenn das Schaltgetriebe (1) unter Last steht.

5. Schaltgetriebesperre (30) nach einem der vorhergehenden Ansprüche, wobei das Eingriffselement (12) als Stützarm (23) ausgeformt ist, vorzugsweise wobei der Stützarm (23)
- eine Anlagefläche (33) zum Anlegen an die Schaltwalze (2) aufweist, und/oder
- in einem Lagerbereich (32) der Sperrklinke (13) mit der Sperrklinke (13) verbunden ist, und/oder
- zusammen mit der Sperrklinke (13) einen zweiseitigen Hebel, insbesondere einen Winkelhebel, ausbildet, besonders bevorzugt, wobei der Winkel des Winkelhebels im Bereich von 80 bis 100 Grad liegt, und/oder
- eine Anlagefläche (33) zum Anlegen des Stützarms (23) an die Schaltwalze (2) und eine Sperrkontur (14) zum Eingriff der Sperrklinke (13) in die Verzahnung (19) des mindestens einen Sperrrads (15) von einem gemeinsamen Lagerbereich (32) des Stützarms (23) und der Sperrklinke (13) aus gesehen an der gleichen Seite des Stützarms (23) beziehungsweise der Sperrklinke (13) angeordnet sind,
und/oder wobei das Eingriffselement (12) als Mitnehmerstift (18) ausgeformt ist.

6. Schaltgetriebesperre (30) nach einem der vorhergehenden Ansprüche, wobei die Schaltwalze eine Betätigungskontur (11) aufweist, wobei das Eingriffselement (12) in der Freilaufstellung an der Betätigungskontur (11) abstützbar ist.

7. Schaltgetriebesperre (30) nach dem vorhergehenden Anspruch, wobei die Betätigungskontur (11)
- im Freilaufdrehbereich der Schaltwalze (2) entlang einer Kreisbahn (25) verläuft, sodass das Eingriffselement (12) mit einer Anlagefläche (33) an der Betätigungskontur (11) anliegt, und/oder
- im Sperrdrehbereich der Schaltwalze (2) eine radial nach innen versenkte Ausnehmung (26) und/oder eine radial nach innen versenkte Kurve aufweist, vorzugsweise sodass das Eingriffselement (12) bei einer Drehstellung der Schaltwalze (2) im Sperrdrehbereich in radialer Richtung freigegeben ist und/oder radial weiter innen angeordnet ist als bei einer Drehstellung der Schaltwalze (2) im Freilaufdrehbereich, und/oder
- im Sperrdrehbereich der Schaltwalze (2) eine radial nach außen weisende Ausbuchtung (31) und/oder eine radial nach außen weisende Kurve aufweist, vorzugsweise sodass das Eingriffselement (12) bei einer Drehstellung der Schaltwalze (2) im Sperrdrehbereich in radialer Richtung freigegeben ist und/oder radial weiter außen angeordnet ist als bei einer Drehstellung der Schaltwalze (2) im Freilaufdrehbereich, und/oder
- radial innerhalb eines Außenradius der Schaltwalze (2) angeordnet ist, und/oder
- an einer Stirnseite (20) der Schaltwalze (2) angeordnet ist.

8. Schaltgetriebesperre (30) nach einem der vorhergehenden Ansprüche, wobei die Sperrklinke (13) und/oder zumindest ein Sperrbereich (34) der Sperrklinke (13) in einem Zwischenraum zwischen der Schaltwalze (2) und dem mindestens einen Sperrrad (15) angeordnet ist.

9. Schaltgetriebe (1), umfassend mindestens eine Schaltwalze (2), mindestens ein Sperrrad (15) mit einer Verzahnung (19) und eine Schaltgetriebesperre (30) nach einem der vorhergehenden Ansprüche, vorzugsweise wobei das Schaltgetriebe (1) ein Gehäuse (31) aufweist und die Schaltgetriebesperre (30) vollständig im Gehäuse (31) angeordnet ist.

10. Schaltgetriebe (1) nach dem vorhergehenden Anspruch, wobei das mindestens eine Sperrrad (15) drehfest mit einer Ausgangswelle (7) des Schaltgetriebes (1) verbunden ist.

11. Schaltgetriebe (1) nach Anspruch 9 oder 10, wobei das Schaltgetriebe (1) eine Anzahl an Getrieberädern (5) aufweist, wobei das mindestens eine Sperrrad (15) als mindestens ein sperrbares Getrieberad der Anzahl der Getrieberäder (5) ausgebildet ist, vorzugsweise wobei das mindestens eine sperrbare Getrieberad
- als Festrad (5b) des Schaltgetriebes (1) ausgebildet ist, und/oder
- als Schaltrad (5c) des Schaltgetriebes (1) ausgebildet ist, und/oder
- ein Losrad (5a) des Schaltgetriebes (1) ausgebildet ist, wobei das mindestens eine sperrbare Getrieberad der Schaltwalze (2) mit mindestens einem Schaltrad (5c), besonders bevorzugt mittels Schaltklauen und/oder Schaltmuffen, drehfest verbunden ist, wenn die Schaltwalze (2) eine Drehstellung im Sperrdrehbereich einnimmt.

12. Schaltgetriebe (1) nach einem der Ansprüche 9 bis 11, wobei das Schaltgetriebe (1) mindestens eine Schaltschiene (3) umfasst, wobei an der mindestens einen Schaltschiene (3) mindestens eine Schaltgabel (10) verschiebbar gelagert ist und wobei die Sperrklinke (13) an mindestens einer Schaltschiene (3) des Schaltgetriebes (1) drehbar gelagert ist.

13. Schaltgetriebe (1) nach einem der Ansprüche 9 bis 12, wobei die Schaltwalze (2) mindestens zwei Drehstellungen im Freilaufdrehbereich einnehmen kann, wobei je eine Drehstellung im Freilaufdrehbereich einem Gang des Schaltgetriebes (1) entspricht.

14. Schaltgetriebe (1) nach einem der Ansprüche 9 bis 13, wobei das Schaltgetriebe (1)
- als Klauengetriebe ausgebildet ist, und/oder
- als automatisches Schaltgetriebe ausgebildet ist, vorzugsweise wobei die Schaltwalze (2) mittels eines Schaltmotors (27) und/oder eines Zahnradantriebs (35) drehbar ist.

15. Motorrad mit einem Antriebsmotor und einem Schaltgetriebe (1) nach einem der Ansprüche 9 bis 14, vorzugsweise wobei das Motorrad eine "normally open"-Kupplung, vorzugsweise eine Fliehkraftkupplung, aufweist, wobei der Antriebsmotor mittels der "normally open"-Kupplung an das Schaltgetriebe (1) kuppelbar ist.

16. Motorrad nach dem vorhergehenden Anspruch, wobei das Motorrad eine elektronische Steuereinheit aufweist,
- wobei von der elektronischen Steuereinheit Steuersignale an mindestens einen Aktor sendbar sind, wobei die Schaltwalze (2) vom von den Steuersignalen steuerbaren, mindestens einen Aktor in mindestens eine Drehstellung im Freilaufdrehbereich und in mindestens eine Drehstellung im Sperrstelldrehbereich drehbar ist, und/oder
- wobei Steuerbefehle eines Fahrers von der elektronischen Steuereinheit empfangbar sind, sodass der Fahrer zwischen verschiedenen Drehstellungen der Schaltwalze (2), insbesondere zwischen mindestens einer Drehstellung im Freilaufbereich und einer Drehstellung im Sperrbereich und/oder zwischen Drehstellungen im Freilaufbereich, schalten kann, und/oder
- wobei mindestens eine Betätigungsanzeige am Motorrad vorgesehen ist, wobei die mindestens eine Betätigungsanzeige die Drehstellung der Schaltwalze (2) anzeigt.
